# FASCICULE DE BREVET EUROPEEN

(11) **EP 3 021 552 B1**
(45) Date de publication et mention de la délivrance du brevet: **02.01.2019**
(21) Numéro de dépôt: 15194435.2
(22) Date de dépôt: 13.11.2015
(51) Int. Cl.: H04L 29/06, H04L 29/08, G06F 3/14, G06F 3/0484, G09G 5/12

(54) **PROCÉDÉS, DISPOSITIFS ET PROGRAMME D'ORDINATEUR POUR COMMUNIQUER VIA UN ESPACE D'INTERACTION PARTAGÉ**
VERFAHREN, VORRICHTUNGEN UND COMPUTERPROGRAMM ZUR KOMMUNIKATION ÜBER EINEN GETEILTEN INTERAKTIONSRAUM
METHODS, APPARATUSES AND COMPUTER PROGRAM FOR COMMUNICATING VIA A SHARED INTERACTION SPACE

(30) Priorité: 14.11.2014 FR 1461015
(43) Date de publication de la demande: 18.05.2016
(73) Titulaire: Orange, 75015 Paris (FR)
(72) Inventeur: CHODOROWSKI, Jacques, 22300 PLOUMILLAU (FR); SALOU, Catherine, 22300 LANNION (FR); MER, Nadia, 22730 Trégastel (FR); COSQUER, Mathilde, 22300 CAOUENNEC-LANVEZEAC (FR); DALOZ, Claude, 22300 LANNION (FR)

(56) Documents cités:
- WO-A1-2008/043182
- WO-A2-2014/093508
- "GSM Association -Rich Communication Suite 5.1 Advanced Communications Services and Client Specification - Version 2.0 -pages 251-482", , 3 mai 2013 (2013-05-03), XP055131363, Extrait de l'Internet: URL:http:// [extrait le 2014-07-24]

## Description

L'invention concerne le domaine du partage des contenus multimédia au cours d'une communication établies entre des terminaux.

Il est possible pour un utilisateur d'établir, via un premier terminal, une communication téléphonique ou visiophonique par exemple, avec un deuxième terminal d'un autre utilisateur. Au cours d'une telle communication, les utilisateurs peuvent partager des contenus multimédia, par exemple des images, textes, vidéos, photos, ou autre, en utilisant le protocole de communication RCS (pour Rich Communication Suite). Au cours d'une communication établie selon le protocole de communication RCS, l'utilisateur du premier terminal doit sélectionner un contenu multimédia stocké sur le premier terminal ou sur un dispositif distant, et ensuite activer sur le premier terminal une commande pour que le premier terminal transmette le contenu multimédia sélectionné au deuxième terminal. Pour partager un contenu multimédia avec le deuxième terminal, l'utilisateur du premier terminal doit préalablement établir la communication avec le deuxième terminal. Une commande de transmission du contenu multimédia à transmettre doit ensuite être activée. Un tel mécanisme de partage de contenus nécessite des interactions sur le premier terminal, telles qu'une recherche d'une commande de partage, sélection d'une commande de partage ou d'une application de partage parmi une pluralité de commandes possibles, activation de la commande de partage sélectionnée. De telles interactions peuvent s'avérer complexes à effectuer lorsque l'utilisateur est déjà en cours de communication et être source d'erreurs, par exemple par la sélection d'une application de partage incorrecte.

La plupart des mécanismes de partage de contenus multimédia au cours d'une communication établie entre des terminaux consistent à partager l'écran d'un terminal maître avec les autres terminaux de la communication. Le contenu de l'écran du terminal maître est alors affiché sur les écrans des autres terminaux impliqués dans la communication. Par exemple, un tel mécanisme est décrit dans le document US2004/0253991A1. L'inconvénient de tels mécanismes est que seul le terminal maître peut proposer des contenus à partager avec les autres terminaux impliqués dans la communication. Pour qu'un autre terminal puisse partager des contenus au cours de la communication, le terminal maître doit donner le contrôle de la communication à l'autre terminal.

Un tel mécanisme nuit à l'interactivité et à la souplesse des échanges entre les terminaux impliqués dans la communication.

Le document WO 2008/043182 A1 (ECOLE TECHNOLOGIE SUPERIEURE [CA]; CHERIET MOHAMED [CA]; DUMAS PIERRE , (2008-04-17), décrit un système collaboratif basé sur un échange d'objets parmi les participants d'une session collaborative d'une manière poste à poste.

Document WO 2014/093508 A2 (MICROSOFT CORP [US]) (2014-06-19) décrit un système offrant un service de collaboration en temps réel avec un serveur stockant des données partagées pendant une session collaborative.

Un des buts de l'invention est d'apporter des améliorations par rapport à l'état de la technique. Elle propose à cet effet un procédé de création d'un espace d'interaction partagé entre un premier terminal et un deuxième selon la revendication 1.

Selon l'invention, un utilisateur peut partager les contenus multimédia visualisés sur une interface de son terminal avec un autre utilisateur lors de l'établissement d'une communication. Une information représentative du contenu multimédia est stockée dans un espace de stockage d'un serveur distant. Une telle information représentative d'un contenu multimédia peut être une adresse, par exemple une URL (pour Uniform Resource Allocator en anglais), pour accéder au contenu multimédia ou le contenu multimédia en lui-même.

Par contenu multimédia, on entend tout type de contenu pouvant être affiché ou restitué par un terminal : image, vidéo, texte, son, page Internet, .... Les contenus multimédia peuvent être affichés sous la forme de vignettes, par exemple lorsque le contenu multimédia est une image, une vidéo, un texte ou une page Internet. Lorsque le contenu multimédia est un fichier audio, le contenu multimédia peut être affiché sous la forme d'un lecteur de fichier audio, ou dans une liste d'un tel lecteur et restitué par des moyens de restitution sonore du terminal lorsque le lecteur est en mode lecture.

Lorsque l'utilisateur établit une communication, telle qu'une communication téléphonique ou visiophonique, avec un autre utilisateur, le procédé selon l'invention permet de créer un espace d'interaction partagé en fusionnant virtuellement les espaces de stockage associés à chaque utilisateur. Ainsi, chaque utilisateur impliqué dans la communication établie peut continuer à visualiser les contenus multimédia de son espace de stockage et peut visualiser les contenus multimédia de l'espace de stockage associé au terminal de l'autre utilisateur impliqué dans la communication. Ainsi, la communication établie entre le premier terminal et le deuxième terminal est enrichie facilement par le partage des contenus multimédia. L'invention s'applique à tous types de communication (audio, vidéo, texte, dessin sur tableau, etc...)

Le partage de contenus entre les utilisateurs impliqués dans la communication établie est ainsi facilité. Les utilisateurs n'ont pas besoin d'activer ou de sélectionner des commandes de partage sur leur terminal au cours de la communication.

Avantageusement, les espaces de stockage de chaque utilisateur sont fusionnés virtuellement de manière temporaire. Un utilisateur n'accède aux contenus multimédia de l'autre utilisateur que pour la durée de la communication.

Avantageusement, l'espace de stockage de chaque utilisateur n'est pas fusionné physiquement au sein du serveur distant. La fusion est faite de manière virtuelle en envoyant au premier terminal les informations représentatives des contenus multimédia de l'utilisateur associé au deuxième espace de stockage, permettant au premier terminal d'accéder aux contenus multimédia. Mais de telles informations ne sont pas stockées dans le premier espace de stockage. Il n'est pas non plus créé d'espace de stockage commun comprenant les informations comprises dans le premier espace de stockage et dans le deuxième espace de stockage. Ainsi, les ressources mémoire du serveur sont optimisées.

Les différents modes ou caractéristiques de réalisation mentionnés ci-après peuvent être ajoutés indépendamment ou en combinaison les uns avec les autres, aux étapes du procédé de création d'un espace d'interaction partagé défini ci-dessus.

Selon un mode particulier de réalisation de l'invention, une information représentative d'un contenu multimédia comprise dans le premier espace de stockage du serveur distant est associée à une information représentative d'une position sur l'interface associée au premier terminal, l'information représentative d'une position correspondant à l'emplacement où est affiché le contenu multimédia sur l'interface. Selon ce mode particulier de réalisation de l'invention, l'envoi au deuxième terminal d'une information représentative d'un contenu multimédia comprise dans le premier espace de stockage comprend en outre l'envoi de l'information représentative de la position dudit contenu multimédia associée.

Selon ce mode particulier de réalisation de l'invention, l'espace de stockage comprend également une information représentant la position sur une interface du terminal où le contenu multimédia est affiché. De la sorte, le premier terminal ou le deuxième terminal peut afficher sur son interface un contenu multimédia à une position identique à celle où est affiché un tel contenu sur l'interface du deuxième terminal ou du premier terminal. Les utilisateurs impliqués dans la communication peuvent alors visualiser une vue identique d'une interface sur laquelle les contenus multimédia sont affichés. Ainsi, le confort de la communication et l'interactivité de la communication sont améliorés.

Selon un autre mode particulier de réalisation de l'invention, le procédé de création d'un espace d'interaction partagé comprend :
- une étape de réception en provenance du premier terminal, d'une information représentative d'un nouveau contenu multimédia ajouté sur l'interface associée au premier terminal au cours de la communication établie, suite à une détection d'une interaction utilisateur,
- une étape de stockage de ladite information représentative dans le premier espace de stockage,
- une étape d'envoi au deuxième terminal de ladite information représentative dudit nouveau contenu multimédia de sorte que le deuxième terminal affiche ledit nouveau contenu multimédia sur l'interface associée au deuxième terminal.

Selon ce mode particulier de réalisation de l'invention, lorsqu'un utilisateur ajoute sur l'interface de son terminal un nouveau contenu multimédia, le nouveau contenu multimédia est également affiché sur l'interface du terminal de l'autre utilisateur impliqué dans la communication. Ainsi, l'interactivité de la communication est améliorée.

Selon un mode particulier de réalisation de l'invention, lors de l'ajout du nouveau contenu multimédia sur l'interface associée au premier terminal au cours de la communication établie, l'information représentative dudit nouveau contenu multimédia est stockée dans le deuxième espace de stockage. Selon ce mode particulier de réalisation de l'invention, Lorsque l'utilisateur du deuxième terminal accédera ultérieurement au deuxième espace de stockage, l'interface associée au deuxième terminal lui affichera une vue du nouveau contenu multimédia. Ainsi, le nouveau contenu multimédia est partagé au cours de la communication et une information représentatvie de ce contenu est automatiquement sauvegardée dans le deuxième espace de stocakge, sans nécessité d'intervention de l'utilisateur du deuxième terminal.

Selon un autre mode particulier de réalisation de l'invention, le procédé de création d'un espace d'interaction partagé comprend :
- une étape de réception d'une information représentative d'une interaction utilisateur effectuée sur un contenu multimédia affiché sur l'interface associée au premier terminal,
- une étape d'envoi au deuxième terminal d'une information représentative de ladite interaction reçue de sorte que le deuxième terminal reproduise sur l'interface associée au deuxième terminal, l'interaction effectuée sur le contenu multimédia.

Selon ce mode particulier de réalisation de l'invention, une interaction utilisateur effectuée sur un contenu multimédia affiché sur l'interface associée au premier terminal est reproduite sur l'interface associée au deuxième terminal. Ainsi, l'interactivité de la communication est améliorée.

Selon ce mode particulier de réalisation de l'invention, une interaction utilisateur peut correspondre au déplacement sur l'interface du contenu multimédia, à un agrandissement ou une diminution de la taille d'une fenêtre dans laquelle le contenu multimédia est affiché, à une composition de texte ou de dessin, à une sélection ou activation de bouton ou lien hypertexte d'une page Internet, etc....

L'invention concerne aussi un procédé de communication entre au moins un premier terminal et un deuxième selon la revendication 5.

Le procédé de communication selon l'invention permet ainsi de partager des contenus multimédia facilement au cours d'une communication établie entre un premier terminal et un deuxième terminal. Selon le procédé de communication de l'invention, dès l'établissement de la communication entre le premier terminal et le deuxième terminal, le premier terminal affiche à un utilisateur à la fois les contenus multimédia initialement affichés sur l'interface du premier terminal et les contenus multimédia affichés sur l'interface du deuxième terminal. La vue de l'interface du premier terminal et la vue de l' interface de deuxième terminal sont ainsi fusionnées temporairement pour créer un espace d'interaction partagé. Une telle fusion est établie pour la durée de la communication entre le premier terminal et le deuxième terminal.

Avantageusement, l'information représentative du deuxième contenu multimédia peut être reçue en provenance d'un serveur distant.

Les différents modes ou caractéristiques de réalisation mentionnés ci-après peuvent être ajoutés indépendamment ou en combinaison les uns avec les autres, aux étapes du procédé de communication défini ci-dessus.

Selon un mode particulier de réalisation de l'invention, le procédé de communication comprend en outre, pour chaque information représentative d'un contenu multimédia comprise dans le deuxième espace de stockage, une étape d'envoi au premier terminal de ladite information représentative. Selon ce mode particulier de réalisation de l'invention, le premier terminal peut ainsi afficher sur l'interface associée au premier terminal le contenu multimédia consulté par l'utilisateur du premier terminal via l'interface associée au premier terminal préalablement à l'établissement de la communication et le contenu multimédia obtenu à partir de l'information représentative comprise dans le deuxième espace de stockage et envoyée au premier terminal.

Selon un autre mode particulier de réalisation de l'invention, le procédé de communication comprend en outre une étape de réception par le deuxième terminal d'une information représentative d'une position d'affichage d'un contenu multimédia sur l'interface associée au premier terminal, de sorte que le contenu multimédia est affiché sur l'interface associée au deuxième terminal à une position identique à ladite position d'affichage sur l'interface associée au premier terminal.

Selon un autre mode particulier de réalisation de l'invention, l'ajout d'un nouveau contenu multimédia sur l'interface associée au premier terminal au cours de la communication établie déclenche :
- une étape de réception par le deuxième terminal d'une information représentative dudit nouveau contenu multimédia,
- une étape d'obtention par le deuxième terminal du nouveau contenu multimédia, à partir de ladite information représentative reçue, de sorte à afficher le nouveau contenu multimédia sur l'interface associée au deuxième terminal.

Selon un autre mode particulier de réalisation de l'invention, la fin de la communication établie entre le premier terminal et le deuxième terminal déclenche :
- une étape de modification de l'interface associée au premier terminal de sorte à afficher seulement les contenus multimédia pour lesquels une information représentative est stockée dans le premier espace de stockage,
- une étape de modification de l'interface associée au deuxième terminal de sorte à afficher seulement les contenus multimédia pour lesquels une information représentative est stockée dans le deuxième espace de stockage.

Selon ce mode particulier de réalisation de l'invention, le partage des contenus multimédia entre l'utilisateur du premier terminal et l'utilisateur du deuxième terminal est fait de manière temporaire, pour la durée de la communication. A la fin de la communication, chaque utilisateur ne conserve sur son interface que les contenus multimédia qui étaient initialement affichés avant l'établissement de la communication et éventuellement les contenus multimédias ajoutés pendant le cours de la communication. A la fin de la communication, chaque utilisateur ne conserve sur son interface que les contenus multimédia pour lesquels une information représentative est stockée dans l'espace de stockage associé à l'utilisateur correspondant. Ainsi, les ressources mémoire des terminaux sont optimisées.

De plus, ce mode particulier de réalisation de l'invention permet d'assurer une certaine protection des contenus multimédia en ne les mettant à disposition d'un autre utilisateur que pendant la durée de la communication.

Selon un autre mode particulier de réalisation de l'invention, le procédé de communication comprend une étape de stockage dans un espace mémoire associé au deuxième terminal d'un contenu affiché sur l'interface associée au premier terminal et pour lequel une information représentative est stockée dans le premier espace de stockage, suite à la détection d'une interaction utilisateur destinée à sélectionner ledit contenu pour le stocker de manière permanente dans un espace mémoire associé au deuxième terminal.

Selon ce mode particulier de réalisation de l'invention, un utilisateur peut sélectionner un contenu multimédia pour l'enregistrer dans une mémoire de son terminal. En variante, une autorisation de l'autre utilisateur peut être nécessaire pour permettre à l'utilisateur d'enregistrer un tel contenu multimédia.

Selon un autre mode particulier de réalisation de l'invention, suite à une étape de détection d'une interaction effectuée sur un contenu multimédia affiché sur l'interface du premier terminal, le procédé comprend :
- une étape de réception par le deuxième terminal d'une information représentative de ladite interaction,
- une étape de modification de l'affichage du contenu multimédia sur l'interface du deuxième terminal de sorte à reproduire ladite interaction sur ladite interface.

Selon ce mode particulier de réalisation de l'invention, les utilisateurs peuvent communiquer via l'interface du premier terminal et l'interface du deuxième terminal au moyen d'interactions effectuées sur les contenus multimédia affichés sur de telles interfaces en plus de la communication téléphonique ou visiophonique établie entre le premier terminal et le deuxième terminal.

Selon un autre mode particulier de réalisation de l'invention, lorsque la communication établie est une communication visiophonique :
- un contenu multimédia correspondant à la vidéo émise par le premier terminal est affiché sur l'interface associée au deuxième terminal,
- et/ou un contenu multimédia correspondant à la vidéo émise par le deuxième terminal est affiché sur l'interface associée au premier terminal.

Selon ce mode particulier de réalisation de l'invention, la composante vidéo de la communication établie est un contenu multimédia affiché sur l'interface de chaque terminal. Ce mode particulier de réalisation de l'invention permet d'intégrer les données visuelles de la communication visiophonique, tel que le flux vidéo, dans l'espace d'interaction partagé par les terminaux T1 et T2. La communication entre les terminaux T1 et T2 est ainsi plus facile pour les utilisateurs des terminaux T1 et T2 car il n'est pas nécessaire d'avoir sur le dispositif d'affichage du terminal T1 ou T2 des fenêtres distinctes pour les données vidéo de la communication et pour l'espace d'interaction partagé.

L'invention concerne également un serveur de création d'un espace d'interaction partagé, selon la revendication 13.
▪ dans un premier espace de stockage associé à un utilisateur du premier terminal, au moins une information représentative d'un contenu multimédia, lorsque ledit utilisateur du premier terminal consulte ledit contenu multimédia sur une interface associée au premier espace de stockage et affichée sur le premier terminal,
▪ dans un deuxième espace de stockage associé à un utilisateur du deuxième terminal, au moins une information représentative d'un contenu multimédia lorsque ledit utilisateur du deuxième terminal consulte ledit contenu multimédia sur une interface associée au deuxième espace de stockage et affichée sur le deuxième terminal,
   - un module de traitement apte à détecter l'établissement de la communication entre le premier terminal et le deuxième terminal,
   - un module de communication activé sur commande du module de traitement suite à l'établissement de la communication entre le premier terminal et le deuxième terminal, ledit module de communication étant apte à envoyer :
      ▪ au premier terminal, chaque information représentative d'un contenu multimédia comprise dans le deuxième espace de stockage, de sorte que le premier terminal affiche ledit contenu multimédia sur l'interface du premier terminal,
      ▪ au deuxième terminal, chaque information représentative d'un contenu multimédia comprise dans le premier espace de stockage, de sorte que le deuxième terminal affiche ledit contenu multimédia sur l'interface du deuxième terminal.

L'invention concerne aussi un terminal de communication selon la revendication 14.

Dans un mode particulier de réalisation de l'invention, les différentes étapes du procédé de communication et du procédé de création d'un espace d'interaction partagé sont mises en oeuvre par des instructions de programmes d'ordinateurs selon la revendication 15.

En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des différentes étapes du procédé de communication et des différentes étapes du procédé de création d'un espace d'interaction partagé qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé de communication ou du procédé de création d'un espace d'interaction partagé en question.

Les avantages du serveur, du terminal de communication, du programme d'ordinateur comportant des instructions adaptées à la mise en oeuvre des différentes étapes du procédé de communication et du programme d'ordinateur comportant des instructions adaptées à la mise en oeuvre des différentes étapes du procédé de création d'un espace d'interaction partagé sont identiques à ceux présentés en relation avec le procédé de communication et à ceux présentés en relation avec le procédé de création d'un espace d'interaction partagé selon l'un quelconque des modes particuliers de réalisation mentionnés ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un environnement de mise en oeuvre de l'invention selon un mode particulier de réalisation de l'invention,
- la figure 2 illustre schématiquement des étapes du procédé de création d'un espace d'interaction partagé et des étapes du procédé de communication selon un mode particulier de réalisation de l'invention,
- les figures 3A, 3B, 3C, 3D et 3E illustrent schématiquement une interface d'un premier terminal mettant en oeuvre le procédé de communication selon un mode particulier de réalisation de l'invention,
- les figures 4A, 4B, 4C, 4D et 4E illustrent schématiquement une interface d'un deuxième terminal mettant en oeuvre le procédé de communication selon un mode particulier de réalisation de l'invention,
- la figure 5 illustre un serveur apte à mettre en oeuvre le procédé de création d'un espace d'interaction partagé selon un mode particulier de réalisation de l'invention.
- la figure 6 illustre un terminal apte à mettre en oeuvre le procédé de communication selon un mode particulier de réalisation de l'invention.

### Description d'un mode particulier de réalisation de l'invention

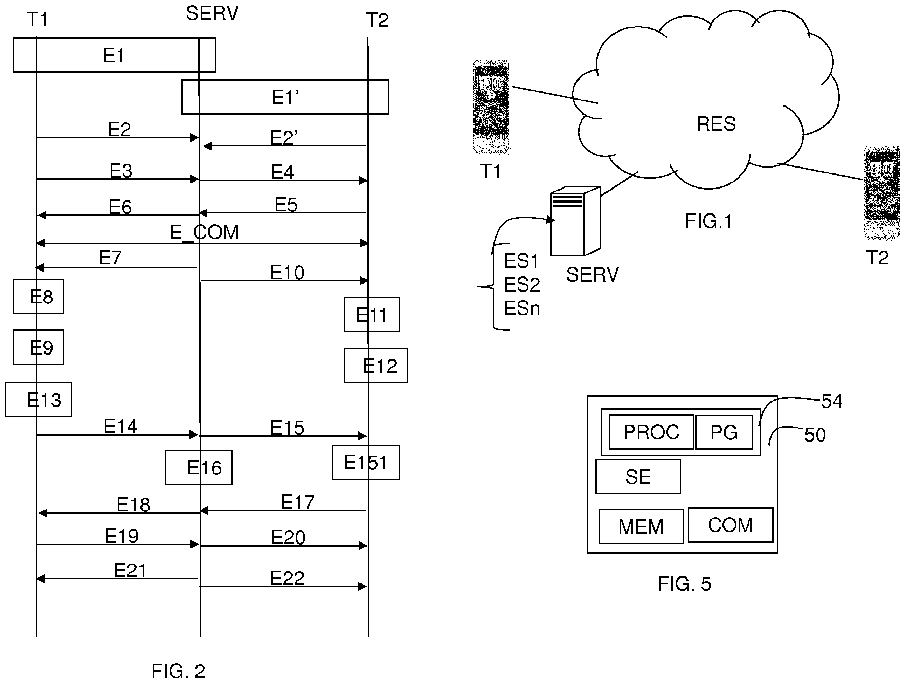

La figure 1 illustre un environnement de mise en oeuvre de l'invention selon un mode particulier de réalisation de l'invention. L'environnement décrit en figure 1 comprend un réseau de communication RES permettant d'échanger des données et d'établir des communications entre des terminaux connectés au réseau de communication RES. Par exemple, le réseau de communication RES est un réseau de communications IP mobile de type 4G ou un réseau de communication IP fixe. Le réseau de communication RES est par exemple un réseau de communication IP basé sur une architecture IMS (pour IP Multimedia Subsystem en anglais).

Le réseau de communication RES peut aussi être un groupe de réseaux de communication interconnectés entre eux par des serveurs d'interconnexion (non représentés). L'environnement de la figure 1 comprend aussi des terminaux T1 et T2 connectés au réseau de communication RES.

Les terminaux T1 et T2 peuvent être tout type de terminaux permettant d'établir une communication téléphonique ou visiophonique, tels qu'un téléphone portable, un smartphone (téléphone intelligent en anglais), une tablette, une télévision connectée à un réseau de communication, un ordinateur personnel sur lequel une application de téléphonie, aussi appelé softphone, est installée.

Plus particulièrement, les terminaux T1 et T2 sont aptes à communiquer via le réseau de communication RES au cours d'une communication établie en mode audio ou visiophonique, ou au cours d'une communication établie en mode texte ou dessin telle que lors d'une session de messagerie instantanée. Les terminaux T1 et T2 sont aptes à afficher sur une interface associée au terminal T1 ou T2 des contenus multimédia en vue de leur consultation.

Selon un mode particulier de réalisation de l'invention, le terminal T1 et le terminal T2 sont aptes à établir une communication selon la technologie WebRTC. Une telle technologie WebRTC permet d'établir des communications entre le terminal T1 et le terminal T2 sur un réseau de communication IP, par exemple le réseau de communication RES, via le navigateur Internet de chaque terminal.

Selon ce mode particulier de réalisation de l'invention, l'environnement de la figure 1 comprend un serveur d'application SERV gérant la signalisation d'une communication à établir entre les terminaux T1 et T2. Le serveur d'application SERV enregistre les terminaux T1 et T2 lorsque ceux-ci signalent au serveur d'application SERV qu'ils sont disponibles pour communiquer selon le protocole WebRTC. Le serveur d'application SERV maintient un premier canal de communication ouvert avec le terminal T1 et un deuxième canal de communication ouvert avec le terminal T2. De tels canaux de communication permettent au serveur d'application SERV de recevoir une demande de communication en provenance du terminal T1 ou du terminal T2 à destination d'un autre terminal ou d'informer le terminal T1 ou le terminal T2 qu'une demande de communication lui est destinée. Lorsqu'une communication est établie entre les terminaux T1 et T2, les flux de données de la communication ne transitent pas par le serveur d'application SERV, mais directement en point à point entre les terminaux T1 et T2, via le réseau de communication RES. Selon un autre mode particulier de réalisation de l'invention, le terminal T1 et le terminal T2 sont aptes à établir une communication selon le protocole SIP (pour Session Initiation Protocol).

Selon cet autre mode particulier de réalisation de l'invention, la signalisation d'une communication à établir entre les terminaux T1 et T2 est gérée par des serveurs d'application du coeur IMS du réseau de communication RES. Afin de recevoir ou émettre une communication, le terminal T1, respectivement T2, s'enregistre auprès du coeur du réseau de communication RES, par l'envoi d'un message SIP REGISTER. L'établissement d'une communication entre le terminal T1 et le terminal T2 est fait par l'échange de messages SIP (INVITE, 180 Ringing, 200OK, ACK) entre les terminaux T1 et T2, via le coeur du réseau de communication RES. Lorsqu'une communication est établie entre les terminaux T1 et T2, les flux de données de la communication transitent directement en point à point entre les terminaux T1 et T2, via le réseau de communication RES.

Selon un mode particulier de réalisation de l'invention, le serveur SERV est un serveur distant mettant en oeuvre le procédé de création d'un espace d'interaction partagé. Pour cela, le serveur SERV comprend un ensemble d'espace de stockage ES1, ES2, ESn associé respectivement à un utilisateur ayant préalablement configuré un compte auprès du fournisseur de service gérant le serveur SERV. De tels espaces de stockage sont destinés à comprendre au moins une information représentative d'un contenu multimédia appartenant à l'utilisateur associé à l'espace de stockage correspondant.

Une telle information représentative d'un contenu multimédia peut correspondre à une adresse, par exemple une URL, permettant d'accéder au contenu multimédia. L'information représentative d'un contenu multimédia peut aussi correspondre à un fichier comprenant le contenu multimédia sous une forme codée standard. Ainsi, le contenu multimédia peut être stocké sur le serveur distant SERV ou sur un autre serveur (non représenté) ou encore sur un terminal de l'utilisateur associé à l'espace de stockage comprenant l'information représentative du contenu multimédia.

Lorsqu'un utilisateur d'un terminal accède à l'espace de stockage qui lui est associé et configuré au sein du serveur SERV, une interface du terminal affiche à l'utilisateur une vue des contenus multimédia dont une information représentative est comprise dans l'espace de stockage.

Par exemple, suite à la configuration de l'espace de stockage associé à l'utilisateur du terminal, une icône permettant l'accès direct à l'espace de stockage est affichée sur un écran du terminal. Lorsque l'utilisateur clique sur une telle icône, le terminal accède à l'espace de stockage associé à l'utilisateur du terminal. Le terminal affiche alors une interface comprenant une représentation de chaque contenu multimédia pour lequel une information représentative est comprise dans l'espace de stockage associé à l'utilisateur du terminal. Ainsi, l'accès à l'espace de stockage permet à l'utilisateur de consulter les contenus multimédia pour lesquels une information représentative est comprise dans l'espace de stockage.

Lorsqu'un utilisateur consulte un nouveau contenu multimédia via l'interface du terminal dédiée à l'espace de stockage, une information représentative du contenu multimédia est envoyée au serveur SERV et mémorisée dans l'espace de stockage associé à l'utilisateur du terminal. L'utilisateur peut consulter un contenu multimédia via une telle interface en glissant un contenu multimédia dans l'interface ou en ouvrant un contenu multimédia via un menu de l'interface.

Ainsi, l'espace de stockage comprend des informations représentatives de contenus en cours de consultation par l'utilisateur via l'interface dédiée de son terminal. Si l'utilisateur supprime un contenu multimédia d'une telle interface, une commande de suppression est envoyée au serveur SERV de sorte que le serveur SERV supprime de l'espace de stockage l'information représentative de ce contenu multimédia.

Selon un mode particulier de réalisation de l'invention, l'information représentative d'un contenu multimédia est associée à une information représentative d'un emplacement sur l'interface du contenu multimédia. Selon ce mode particulier de réalisation de l'invention, l'espace de stockage mémorise pour chaque contenu multimédia l'emplacement où est affichée une représentation du contenu multimédia sur l'interface du terminal. Lorsque l'utilisateur du terminal effectue une interaction sur son terminal pour déplacer un contenu multimédia affiché sur l'interface, le terminal envoie une commande au serveur SERV de sorte que l'information représentative de l'emplacement du contenu multimédia sur l'interface stockée par le serveur SERV est mise à jour à partir de la nouvelle position du contenu multimédia sur l'interface.

Ce mode particulier de réalisation de l'invention permet que lorsque l'utilisateur accède ultérieurement à l'espace de stockage, l'interface de son terminal affiche une représentation des contenus multimédia compris dans l'espace de stockage telle qu'elle était lors de la dernière consultation de l'espace de stockage par l'utilisateur.

La communication entre le terminal de l'utilisateur et le serveur SERV peut par exemple être effectuée via des requêtes HTTP.

Selon un mode particulier de réalisation de l'invention, l'espace de stockage peut être configuré localement sur le terminal de l'utilisateur, de sorte l'utilisation du serveur distant SERV est inutile. Selon l'un quelconque des modes de réalisation de l'invention, utilisant ou non le serveur SERV, l'utilisateur du terminal T1 a configuré un espace de stockage ES1. Eventuellement, l'utilisateur du terminal T2 a configuré un espace de stockage ES2.

Conformément au procédé de communication selon l'invention, lorsque l'utilisateur du terminal T1 accède à l'espace de stockage ES1 et qu'il établit une communication avec l'utilisateur du terminal T2, un espace d'interaction partagé est créé de sorte que le terminal T2 accède à l'espace de stockage ES1 et que le terminal T1 accède à l'espace de stockage ES2.

La figure 2 illustre schématiquement des étapes du procédé de création d'un espace d'interaction partagé et des étapes du procédé de communication selon un mode particulier de réalisation de l'invention.

Selon ce mode particulier de réalisation de l'invention, le procédé de création d'un espace d'interaction partagé est mis en oeuvre par un serveur distant, par exemple le serveur SERV de la figure 1. Le procédé de communication est mis en oeuvre par les terminaux T1 et T2 de la figure 1. Lors d'une étape E1 d'initialisation, le terminal T1 configure un espace de stockage ES1 associé à l'utilisateur du terminal T1 au sein du serveur SERV. Par exemple, l'utilisateur du terminal T1 demande au serveur SERV la création d'un compte utilisateur en fournissant un nom d'utilisateur et un mot de passe. Une telle configuration peut être faite via une application web ou une page Internet fournie par un fournisseur de service gérant le serveur SERV. Au cours de l'étape E1, le serveur SERV crée un espace de stockage ES1 associé à l'utilisateur du terminal T1.

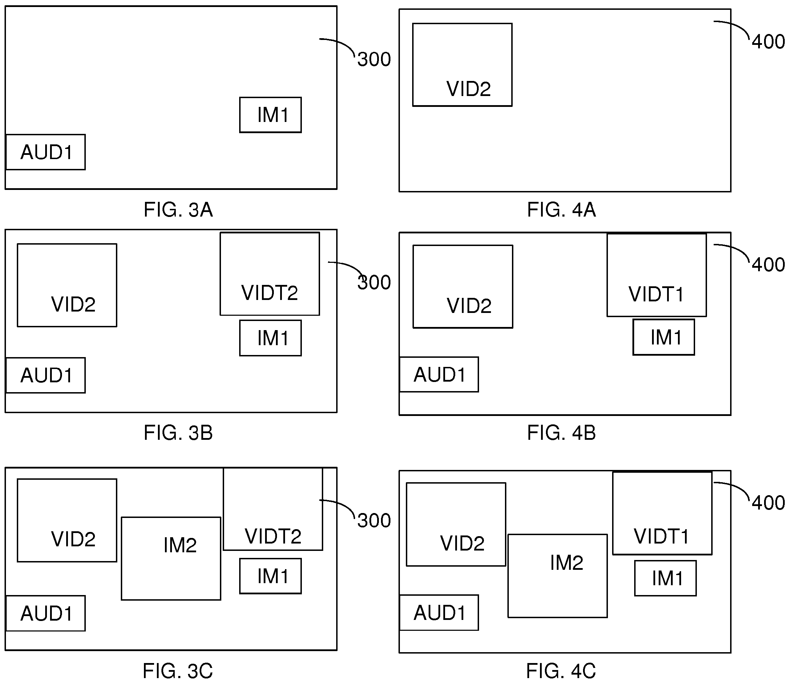

Lors d'une étape E2, l'utilisateur du terminal T1 ajoute à l'espace de stockage ES1 des contenus multimédia, par exemple une image IM1 et un fichier audio AUD1, via une interface du terminal T1 dédiée à l'affichage de l'espace de stockage ES1. Une telle interface est par exemple illustrée par la figure 3A. La figure 3A représente une interface 300 du terminal T1 comprenant une représentation de l'image IM1, affichée par exemple sous la forme d'une vignette, et du fichier audio AUD1, affiché sous la forme d'un lecteur de fichier audio.

Au cours de l'étape E2, le terminal T1 envoie au serveur SERV :
- une information représentative du contenu multimédia IM1 ainsi qu'une information représentative de l'emplacement de IM1 sur l'interface 300,
- une information représentative du contenu multimédia AUD1 ainsi qu'une information représentative de l'emplacement de AUD1 sur l'interface 300,

De telles informations sont stockées par le serveur SERV dans l'espace de stockage ES1. L'information représentative d'un emplacement d'un contenu multimédia peut par exemple comprendre :
- la position du centre de la vignette représentant le contenu multimédia,
- un angle de rotation de la vignette par rapport à un axe vertical ou horizontal,
- une échelle d'affichage de la vignette.

De manière similaire à l'étape E1, lors d'une étape E1', le terminal T2 configure un espace de stockage ES2 associé à l'utilisateur du terminal T2 au sein du serveur SERV.

Lors d'une étape E2', l'utilisateur du terminal T2 ajoute à l'espace de stockage ES2 un contenu multimédia, par exemple une vidéo VID2, via une interface du terminal T2 dédiée à l'affichage de l'espace de stockage ES2. Une telle interface est par exemple illustrée par la figure 4A. La figure 4A représente une interface 400 du terminal T2 comprenant une représentation de la vidéo VID2, affichée par exemple sous la forme d'une vignette.

Au cours d'une étape E3, l'utilisateur du terminal T1 souhaite communiquer avec l'utilisateur du terminal T2. Pour cela, au cours de l'étape E3, l'utilisateur active une commande de demande de communication via l'interface du terminal T1 dédiée à l'affichage de l'espace de stockage ES1 et sélectionne l'identité de l'utilisateur du terminal T2. Par exemple, l'utilisateur du terminal T1 demande une communication visiophonique. Au cours de l'étape E3, le terminal T1 envoie au serveur SERV une demande de communication destinée à l'utilisateur du terminal T2. Une telle demande de communication comprend notamment les informations permettant au terminal T2 de recevoir un flux audio et un flux vidéo de la communication en provenance du terminal T1. De telles informations correspondent par exemple à l'adresse IP et aux ports de communication utilisés par le terminal T1. La demande de communication est reçue par le serveur SERV au cours de l'étape E3.

Au cours d'une étape E4, le serveur SERV transmet la demande de communication reçue lors de l'étape E3 au terminal T2.

Suite à la réception de la demande de communication par le terminal T2 au cours de l'étape E4, le terminal T2 déclenche une présentation de la demande de communication de sorte à informer l'utilisateur du terminal T2 de la demande de communication reçue. Par exemple, le terminal T2 affiche sur l'interface 400 du terminal T2 un message indiquant la réception d'une demande de communication en provenance de l'utilisateur du terminal T1 ainsi que des boutons permettant d'accepter ou de refuser la demande de communication. Au cours de l'étape E4, l'utilisateur du terminal T2 accepte la demande de communication.

Suite à l'acceptation de la demande de communication par l'utilisateur du terminal T2, le terminal T2 envoie, au cours d'une étape E5, au serveur SERV un message d'acceptation de la demande de communication. Le message d'acceptation comprend notamment les informations permettant au terminal T1 de recevoir un flux audio et un flux vidéo de la communication en provenance du terminal T2. De telles informations correspondent par exemple à l'adresse IP et aux ports de communication utilisés par le terminal T2.

Au cours d'une étape E6, le serveur SERV transmet le message d'acceptation de la demande de communication au terminal T1.

Au cours d'une étape E_COM, la communication visiophonique est établie entre les terminaux T1 et T2 grâce aux informations de communication transmises respectivement par le terminal T1 au terminal T2 dans la demande de communication émise lors de l'étape E3 et par le terminal T2 au terminal T1 dans le message d'acceptation émis lors de l'étape E5. Les étapes E3 à E6 sont par exemple mises en oeuvre selon le protocole de communication WebRTC.

Un contenu multimédia VIDT2 relatif à la partie vidéo de la communication visiophonique émise par le terminal T2 est alors affiché par le terminal T1 sur l'interface 300, tel qu'illustré en figure 3B.

Un contenu multimédia VIDT1 relatif à la partie vidéo de la communication visiophonique émise par le terminal T1 est alors affiché par le terminal T2 sur l'interface 400, tel qu'illustré en figure 4B.

Les flux de données audio et vidéo de la communication sont transmis au cours de l'étape E_COM entre les terminaux T1 et T2 via le réseau de communication RES.

Suite à l'acceptation de la demande de communication reçue lors de l'étape E5, le serveur SERV va créer au cours d'une étape E7 et d'une étape E10 un espace d'interaction partagé entre les terminaux T1 et T2.

Pour cela, au cours de l'étape E7, le serveur SERV envoie au terminal T1 pour chaque contenu multimédia affiché sur l'interface 400 du terminal T2, l'information représentative du contenu multimédia stockée dans l'espace de stockage ES2 associé à l'utilisateur du terminal T2, ainsi que l'information représentative de la position du contenu multimédia sur l'interface 400.

Au cours de l'étape E10, le serveur SERV envoie au terminal T2 pour chaque contenu multimédia affiché sur l'interface 300 du terminal T1, l'information représentative du contenu multimédia stockée dans l'espace de stockage ES1 associé à l'utilisateur du terminal T1, ainsi que l'information représentative de la position du contenu multimédia sur l'interface 300.

Suite à la réception au cours de l'étape E7, par le terminal T1, d'au moins une information représentative d'un contenu multimédia, le terminal T1 obtient lors d'une étape E8 chaque contenu multimédia à partir de l'information représentative correspondante reçue. Par exemple, à partir d'une information représentative reçue, le terminal T1 accède à un serveur distant ou au terminal T2 sur lequel est mémorisé le contenu multimédia correspondant et le télécharge dans une mémoire temporaire.

Au cours d'une étape E9, le terminal T1 affiche sur l'interface 300 les contenus multimédia obtenus lors de l'étape E8. Selon un mode particulier de réalisation de l'invention, les contenus multimédia obtenus sont affichés sur l'interface 300 à des positions identiques aux positions où ils sont affichés sur l'interface 400 du terminal T2.

L'interface 300 du terminal T1 suite à l'étape E9 est par exemple illustrée par la figure 3B. La figure 3B comprend :
- une représentation des contenus multimédia IM1, AUD1, de l'espace de stockage ES1,
- une représentation des contenus multimédia obtenus lors de l'étape E8 :VID2.

Suite à la réception au cours de l'étape E10, par le terminal T2, d'au moins une information représentative d'un contenu multimédia, le terminal T2 obtient lors d'une étape E11 chaque contenu multimédia à partir de l'information représentative correspondante reçue. Par exemple, à partir d'une information représentative reçue, le terminal T2 accède à un serveur distant ou au terminal T1 sur lequel est mémorisé le contenu multimédia correspondant et le télécharge dans une mémoire temporaire.

Au cours d'une étape E12, le terminal T2 affiche sur l'interface 400 les contenus multimédia obtenus lors de l'étape E11. Selon un mode particulier de réalisation de l'invention, les contenus multimédia obtenus sont affichés sur l'interface 400 à des positions identiques à aux positions où ils sont affichés sur l'interface 300 du terminal T1.

L'interface 400 du terminal T2 suite à l'étape E11 est par exemple illustrée par la figure 4B. La figure 4B comprend :
- une représentation des contenus multimédia VID2 compris dans l'espace de stockage ES2,
- une représentation des contenus multimédia obtenus lors de l'étape E11 : IM1, AUD1.

Ainsi, les utilisateurs des terminaux T1 et T2 disposent d'une même représentation de leur contenu multimédia et peuvent communiquer sur de tels contenus au cours de la communication établie lors de l'étape E_COM.

Selon l'invention, un espace d'interaction partagé a ainsi été créé entre les terminaux T1 et T2 à partir des espaces de stockage ES1 et ES2 associés respectivement aux utilisateurs des terminaux T1 et T2. Un tel espace d'interaction partagé est représenté au niveau du terminal T1 par l'interface d'affichage 300 et au niveau du terminal T2 par l'interface d'affichage 400. L'espace d'interaction est partagé dans le sens où chaque utilisateur du terminal T1 ou du terminal T2 accède aux contenus multimédia de son espace de stockage et aux contenus multimédia de l'espace de stockage de l'autre utilisateur avec lequel il est en communication. La création de l'espace d'interaction partagé est temporaire et ne dure que pour la durée de la communication. L'espace d'interaction partagé est interactif dans le sens où chaque utilisateur peut, via l'interface de son terminal, interagir sur les contenus multimédia affichés, en ajouter d'autres ou supprimer ceux de son espace de stockage.

Selon un premier exemple, l'utilisateur du terminal T1 souhaite ajouter un nouveau contenu multimédia à l'espace d'interaction partagé entre les terminaux T1 et T2 au cours de la communication. Au cours d'une étape E13, le terminal T1 détecte une interaction utilisateur ajoutant à l'interface 300 du terminal T1 un nouveau contenu multimédia, par exemple une image IM2. Au cours de l'étape E13, le terminal T1 modifie l'affichage de l'interface 300 de sorte à afficher le nouveau contenu multimédia IM2 sur l'interface 300, tel qu'illustré par la figure 3C.

Suite à l'étape E13, le terminal T1 envoie lors d'une étape E14, au serveur SERV, une information représentative du contenu multimédia IM2 et une information représentative de la position de IM2 sur l'interface 300.

Lors de l'étape E14, le serveur SERV détermine que les données de l'espace de stockage ES1 associé à l'utilisateur du terminal T1 doivent être mises à jour. Pour cela, au cours d'une étape E16, le serveur SERV mémorise dans l'espace de stockage ES1 associé à l'utilisateur du terminal T1, l'information représentative du contenu multimédia IM2 et l'information représentative de la position de IM2 sur l'interface 300 reçues au cours de l'étape E14.

Puis, au cours d'une étape E15, le serveur SERV envoie au terminal T2 l'information représentative du contenu multimédia IM2 et l'information représentative de la position de IM2 sur l'interface 300 de sorte que le terminal T2 mette à jour l'interface 400.

Au cours de l'étape E15, le terminal T2 reçoit l'information représentative du contenu multimédia IM2 et l'information représentative de la position de IM2 sur l'interface 300.

Au cours d'une étape E151, le terminal T2 obtient le contenu multimédia IM2 à partir de l'information représentative du contenu multimédia IM2 et modifie l'interface 400 pour afficher le contenu multimédia IM2.

Au cours de l'étape E151, le terminal T2 affiche sur l'interface 400 le contenu multimédia IM2 en utilisant l'information représentative de la position de IM2 sur l'interface 300 reçue. Suite à l'étape E151, l'interface 400 est modifiée telle qu'illustrée par la figure 4C.

Selon un mode particulier de réalisation de l'invention, au cours de l'étape E16, le serveur SERV mémorise également dans l'espace de stockage ES2 associé à l'utilisateur du terminal T2, l'information représentative du contenu multimédia IM2.

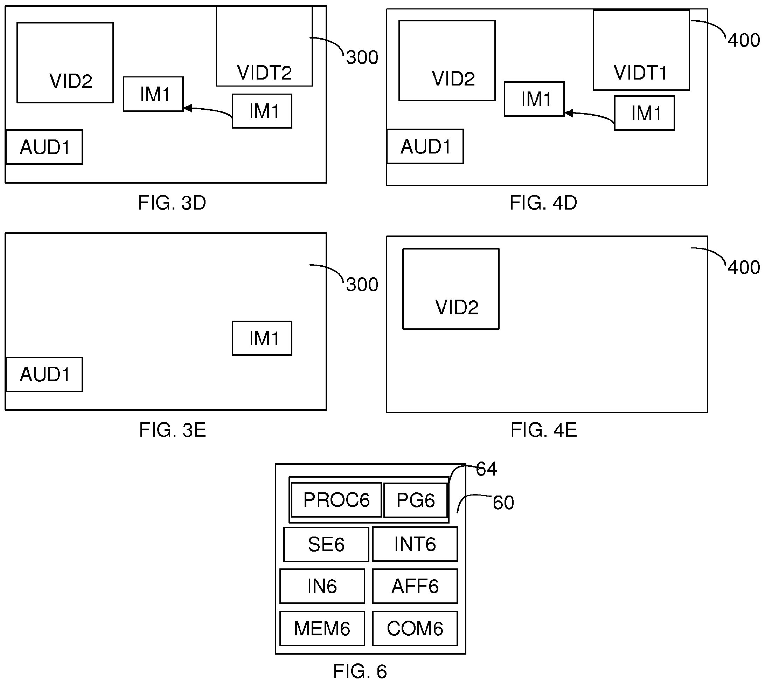

Selon un deuxième exemple, l'utilisateur du terminal T1 déplace sur l'interface 300 un contenu multimédia de l'espace d'interaction partagé entre les terminaux T1 et T2. Au cours de l'étape E13, le terminal T1 détecte une interaction utilisateur déplaçant sur l'interface 300 du terminal T1 le contenu multimédia IM1. L'affichage de l'interface 300 est modifiée de sorte à afficher le contenu multimédia IM1 à sa nouvelle position telle qu'illustrée par la figure 3D.

Suite à l'étape E13, le terminal T1 envoie lors d'une étape E14, au serveur SERV, une information représentative de la nouvelle position de IM1 sur l'interface 300.

Lors de l'étape E14, comme le contenu multimédia IM1 appartient à l'espace de stockage ES1, le serveur SERV détermine que les données de l'espace de stockage ES1 associé à l'utilisateur du terminal T1 doivent être mises à jour. Pour cela, au cours d'une étape E16, le serveur SERV met à jour dans l'espace de stockage ES1 associé à l'utilisateur du terminal T1, l'information représentative de la position de IM1 à partir de l'information représentative de la nouvelle position de IM1 reçue au cours de l'étape E14.

Puis, au cours d'une étape E15, le serveur SERV envoie au terminal T2 l'information représentative de la nouvelle position de IM1 sur l'interface 300 de sorte que le terminal T2 mette à jour l'interface 400.

Au cours de l'étape E15, le terminal T2 reçoit l'information représentative de la nouvelle position de IM1 sur l'interface 300.

Au cours d'une étape E151, le terminal T2 modifie l'interface 400 pour reproduire le déplacement du contenu multimédia IM1 sur l'interface 400 et l'afficher à la nouvelle position. La modification de l'interface 400 est illustrée par la figure 4D.

Selon un autre exemple, l'utilisateur du terminal T1 peut interagir sur un contenu multimédia de l'espace de stockage ES2. Dans ce cas, les données relatives à ce contenu multimédia dans l'espace de stockage ES2 sont mises à jour par le serveur SERV en fonction d'une telle interaction et transmise au terminal T2 pour que le terminal T2 mette à jour l'interface 400.

Selon un autre exemple, l'interaction utilisateur de l'utilisateur du terminal T1 peut être un agrandissement ou une diminution de la vignette représentant un contenu multimédia. Les paramètres d'une telle transformation sont alors transmis au serveur SERV qui met à jour les données associées au contenu multimédia dans l'espace de stockage auquel le contenu multimédia appartient. La modification des données est également transmise au terminal T2 pour que le terminal T2 reproduise la transformation sur l'interface 400.

Selon un autre mode particulier de réalisation de l'invention, l'utilisateur du terminal T1 et l'utilisateur du terminal T2 peuvent interagir à distance simultanément sur un même contenu multimédia. Ce mode particulier de réalisation de l'invention est particulièrement avantageux lorsque le contenu multimédia est une fenêtre d'un navigateur Internet, un jeu ou un dessin collaboratif.

Selon ce mode particulier de réalisation, l'interaction de l'utilisateur du terminal T1 sur le contenu multimédia affiché sur l'interface 300, par exemple l'activation d'un lien hypertexte sur une page Internet, ou la composition d'un dessin, est transmise au serveur SERV qui transmet au terminal T2 une commande permettant au terminal T2 de reproduire l'interaction de l'utilisateur du terminal T1.

Selon le procédé de communication selon l'invention, seules les interactions effectuées sur les contenus multimédia affichés dans l'espace d'interaction partagé sont transmises entre les terminaux T1 et T2 de sorte à être reproduites sur chaque terminal impliqué dans la communication.

Par exemple, une interaction utilisateur relative à l'ouverture d'un menu sur l'interface 300 du terminal T1 afin de sélectionner un nouveau contenu multimédia pour l'ajouter à l'espace d'interaction partagé n'est pas transmise au terminal T2. Une telle interaction n'a pas besoin d'être reproduite sur le terminal T2. Seul l'ajout du nouveau contenu doit être reproduit par l'affichage du nouveau contenu sélectionné.

Lors d'une étape E17, l'utilisateur du terminal T2 souhaite mettre fin à la communication établie entre le terminal T1 et le terminal T2. Pour cela, le terminal T2 détecte une interaction utilisateur sur l'interface 400 indiquant la fin de la communication visiophonique. Lors de l'étape E17, le terminal T2 envoie alors au serveur SERV un message indiquant la fin de la communication avec le terminal T1. Lors de l'étape E17, le terminal T2 modifie l'interface 400 de sorte à supprimer l'affichage VIDT1 de la vidéo de la communication émise par le terminal T1.

Lors d'une étape E18, le serveur SERV transmet un tel message au terminal T1 qui l'acquitte par l'envoi au serveur SERV d'un message d'acquittement lors d'une étape E19. Le serveur SERV transmet le message d'acquittement au terminal T2 lors d'une étape E20. Lors de l'étape E19, le terminal T1 modifie l'interface 300 de sorte à supprimer l'affichage VIDT2 de la vidéo de la communication émise par le terminal T2.

La fin de la communication entre les terminaux T1 et T2 est par exemple mise en oeuvre au cours des étapes E17 à E20 selon le protocole WebRTC.

Suite à la fin de la communication entre le terminal T1 et le terminal T2, le serveur SERV envoie au terminal T2 lors d'une étape E22 une commande de modification de l'interface 400 pour supprimer de l'interface 400 la représentation des contenus multimédia de l'espace de stockage ES1. L'interface 400 du terminal T2 comprend alors uniquement les contenus multimédia compris dans l'espace de stockage ES2, tel qu'illustré par la figure 4E.

Suite à la fin de la communication entre le terminal T1 et le terminal T2, le serveur SERV envoie également au terminal T1 lors d'une étape E21 une commande de modification de l'interface 300 pour supprimer de l'interface 300 la représentation des contenus multimédia de l'espace de stockage ES2. L'interface 300 du terminal T1 comprend alors uniquement les contenus multimédia compris dans l'espace de stockage ES1, tel qu'illustré par la figure 3E.

Selon un autre mode particulier de réalisation de l'invention, au cours de la communication établie entre le terminal T1 et le terminal T2, l'utilisateur du terminal T1 ou du terminal T2 peut demander l'enregistrement de manière permanente d'un contenu multimédia de l'espace d'interaction partagé. Pour cela, le terminal T1 détecte une interaction utilisateur ouvrant un menu relatif à un contenu multimédia, par exemple le contenu multimédia VID2, et sélectionnant une commande d'enregistrement local du contenu multimédia. Le terminal T1 mémorise alors dans un espace mémoire permanent le contenu multimédia VID2. Un tel enregistrement permet à l'utilisateur du terminal T1 d'accéder au contenu multimédia VID2 même lorsque la communication avec le terminal T2 est terminée. L'interaction d'ouverture du menu et de sélection de l'action n'est pas reproduite au niveau du terminal T2. Cependant, en variante, l'enregistrement par le terminal T1 du contenu multimédia VID2 peut être conditionné par une autorisation de l'utilisateur du terminal T2. Préalablement à l'enregistrement, le terminal T1 envoie alors au terminal T2 une demande d'autorisation pour enregistrer le contenu multimédia VID2. Le terminal T2 peut afficher sur l'interface 400 un message de demande d'autorisation. Si l'utilisateur du terminal T2 accepte un tel enregistrement, le terminal T2 envoie au terminal T1 un message d'autorisation et le terminal T1 enregistre le contenu multimédia dans un espace mémoire permanent.

En variante, au lieu d'enregistrer le contenu multimédia VID2 dans un espace mémoire permanent, la commande d'enregistrement correspond à un ajout d'une information représentative du contenu multimédia VID2 dans l'espace de stockage ES1 de l'utilisateur du terminal T1.

Selon un autre mode particulier de réalisation de l'invention, le procédé de création d'un espace d'interaction partagé est mis en oeuvre par les terminaux T1 et T2, sans le serveur SERV. Dans ce mode particulier de réalisation de l'invention, les espaces de stockage ES1 et ES2 associés à chaque utilisateur sont créés respectivement sur les terminaux T1 et T2. Lors de l'établissement de la communication entre les terminaux T1 et T2, les informations représentatives des contenus multimédia comprises dans les espaces de stockage ES1 et ES2 et les informations représentatives des emplacements d'affichage de ces contenus multimédia, sont transmises directement par le terminal T1 ou le terminal T2 à l'autre terminal T2 ou T1. Le terminal T1 et le terminal T2 mémorise pour chaque contenu multimédia affiché sur l'interface 300 ou 400 si le contenu multimédia appartient à l'espace de stockage ES1 ou ES2, de sorte que la fusion des espaces de stockage reste virtuelle sur l'interface 300 et l'interface 400. Ainsi, à la fin de la communication entre le terminal T1 et le terminal T2, le terminal T1, respectivement T2, peut supprimer sur l'interface 300, respectivement 400, l'affichage des contenus multimédia qui n'appartiennent pas à l'espace de stockage ES1, respectivement ES2, associé à l'utilisateur du terminal T1, respectivement T2.

Selon ce mode particulier de réalisation de l'invention, l'établissement de la communication peut par exemple être mis en oeuvre selon le protocole SIP. La transmission des informations représentatives des contenus multimédia et de leurs informations représentatives de leur emplacement d'affichage peuvent être transmises dans des messages SIP dédiés à l'invention.

Le procédé de création d'un espace d'interaction partagé et le procédé de communication via ledit espace d'interaction partagé peuvent être mis en oeuvre lorsque plus de deux terminaux sont impliqués dans la communication établie.

La figure 5 illustre un serveur apte à mettre en oeuvre le procédé de création d'un espace d'interaction partagé selon un mode particulier de réalisation de l'invention décrit en relation avec la figure 2.

Le serveur 50 comprend un module de traitement 54, comprenant notamment un module de stockage MEM, par exemple une mémoire, et une unité de traitement PROC, équipée par exemple d'un microprocesseur. L'unité de traitement PROC est pilotée par un programme d'ordinateur PG mettant en oeuvre le procédé de création d'un espace d'interaction partagé tel que décrit en relation avec la figure 2.

Le module de stockage MEM est configuré pour associer un espace de stockage du module de stockage MEM à un utilisateur d'un terminal, par exemple le terminal T1 ou T2 de la figure 1. Un tel espace de stockage est apte à comprendre au moins une information représentative d'un contenu multimédia affiché sur une interface du terminal.

A l'initialisation, les instructions de code du programme d'ordinateur PG sont par exemple chargées en mémoire MEM avant d'être exécutées par le processeur de l'unité de traitement PROC.

Le processeur de l'unité de traitement PROC met en oeuvre les étapes du procédé de création d'un espace d'interaction partagé à partir d'au moins un premier espace de stockage associé à un utilisateur d'un premier terminal et d'au moins un deuxième espace de stockage associé à un utilisateur d'un deuxième terminal, selon les instructions du programme d'ordinateur PG. Le processeur de l'unité de traitement PROC met notamment en oeuvre :
- pour chaque information représentative d'un contenu multimédia comprise dans le deuxième espace de stockage, une étape d'envoi au premier terminal de ladite information représentative dudit contenu multimédia, de sorte que le premier terminal affiche ledit contenu multimédia sur une première interface associée au premier terminal,
- pour chaque information représentative d'un contenu multimédia comprise dans le premier espace de stockage, une étape d'envoi au deuxième terminal de ladite information représentative dudit contenu multimédia, de sorte que le deuxième terminal affiche ledit contenu multimédia sur une deuxième interface associée au deuxième terminal.

Le serveur 50 comporte également un module de communication COM permettant au serveur 50 de se connecter à un réseau de communication et d'échanger des données avec les terminaux T1 et T2 connectés à ce réseau de communication. Le module de communication COM est apte à envoyer une information représentative d'un contenu multimédia comprise dans un espace de stockage du module de stockage à un terminal et à recevoir une telle information en provenance d'un autre terminal.

La figure 6 illustre un terminal apte à mettre en oeuvre le procédé de communication selon un mode particulier de réalisation de l'invention, par exemple tel que décrit en relation avec la figure 2. Le terminal 60 comprend un module de traitement 64, comprenant notamment un module de stockage MEM6, par exemple une mémoire, et une unité de traitement PROC6, équipée par exemple d'un microprocesseur. L'unité de traitement PROC6 est pilotée par un programme d'ordinateur PG6 mettant en oeuvre le procédé de communication tel que décrit en relation avec la figure 2.

A l'initialisation, les instructions de code du programme d'ordinateur PG6 sont par exemple chargées en mémoire MEM6 avant d'être exécutées par le processeur de l'unité de traitement PROC6.

Le processeur de l'unité de traitement PROC6 met en oeuvre les étapes du procédé de communication entre au moins le terminal 60 et un deuxième terminal, selon les instructions du programme d'ordinateur PG6.

Le terminal 60 comprend une interface INT6 apte à afficher au moins un premier contenu multimédia à partir d'une information représentative dudit contenu multimédia comprise dans un espace de stockage ES1. L'interface INT6 est par exemple une interface graphique associée au programme d'ordinateur PG6.

Le processeur de l'unité de traitement PROC6 met notamment en oeuvre :
- une étape d'établissement de la communication entre le premier terminal et le deuxième terminal,
- lorsqu'un espace de stockage ES2 associé à un utilisateur du deuxième terminal comprend au moins une information représentative d'un contenu multimédia, pour chaque information représentative d'un contenu multimédia comprise dans l'espace de stockage ES2 :
   ▪ réception par le terminal 60 de ladite information représentative d'un contenu multimédia,
   ▪ obtention par le terminal 60 dudit contenu multimédia, à partir de ladite information représentative reçue,
   ▪ modification de l'affichage sur l'interface INT6 de sorte à afficher ledit contenu multimédia obtenu et le au moins un premier contenu multimédia, pendant la durée de la communication établie entre le terminal 60 et le deuxième terminal.

Le module de stockage MEM6 est apte à stocker temporairement, pour la durée de la communication établie entre le terminal 60 et le deuxième terminal ledit contenu multimédia en vue de son affichage par l'interface INT6.

Le terminal 60 comprend également un dispositif d'affichage AFF6, tel qu'un écran intégré au terminal 60 ou connecté au terminal 60.

L'affichage sur le dispositif d'affichage AFF6 est contrôlé par le processeur de l'unité de traitement PROC6 selon les instructions de code du programme d'ordinateur PG6 et du système d'exploitation SE6 du terminal 60.

Le terminal 60 comporte un module d'interaction utilisateur IN6 permettant à un utilisateur d'interagir sur le terminal 60. Le module d'interaction utilisateur IN6 permet notamment à un utilisateur d'interagir sur un contenu multimédia affiché sur l'interface INT6.

Selon un mode particulier de réalisation de l'invention, le module d'interaction utilisateur IN6 est une interface tactile.

Selon un autre mode particulier de réalisation de l'invention, le module d'interaction utilisateur IN6 est une interface tactile intégrée à l'écran associé au terminal 60. L'écran associé au terminal est alors un écran tactile.

Le terminal 60 comporte également un module de communication COM6 permettant au terminal 60 de se connecter à un réseau de communication et d'échanger des données avec des terminaux connectés à ce réseau de communication, ou d'établir des communications avec d'autres terminaux. Le module de communication COM6 est apte à recevoir une demande de communication en provenance d'un autre terminal, à envoyer une demande de communication à un autre terminal, à recevoir une information représentative d'un contenu multimédia et à envoyer à un serveur distant ou à un terminal une telle information.

Selon un mode particulier de réalisation de l'invention, le module de stockage MEM6 permet de stocker au moins une information représentative d'un contenu multimédia. Le module de stockage MEM6 est apte à mémoriser les données d'un espace de stockage ES1 ou ES2.

Selon un mode particulier de réalisation de l'invention, le terminal 60 est un terminal mobile, ou fixe, ou une tablette, ou une télévision connectée, ou tout objet connecté.

## Revendications

1. Procédé de création d'un espace d'interaction partagé entre un premier terminal (T1) et un deuxième terminal (T2), dans lequel, préalablement à l'établissement d'une communication entre le premier terminal et le deuxième terminal :
• un premier espace de stockage d'un serveur distant est associé à un utilisateur du premier terminal, ledit premier espace de stockage comprenant au moins une information représentative d'un premier contenu multimédia lorsque ledit utilisateur du premier terminal consulte le premier contenu multimédia sur une interface associée au premier espace de stockage et affichée sur le premier terminal,
• un deuxième espace de stockage d'un serveur distant est associé à un utilisateur du deuxième terminal, ledit deuxième espace de stockage comprenant au moins une information représentative d'un deuxième contenu multimédia lorsque ledit utilisateur du deuxième terminal consulte le deuxième contenu multimédia sur une interface associée au deuxième espace de stockage et affichée sur le deuxième terminal,
suite à l'établissement de la communication (E_COM) entre le premier terminal et le deuxième terminal, le procédé comprend :
• une étape d'envoi (E7) au premier terminal de chaque information représentative d'un contenu multimédia comprise dans le deuxième espace de stockage, de sorte que le premier terminal affiche (E9) ledit contenu multimédia sur l'interface du premier terminal,
• une étape d'envoi (E10) au deuxième terminal de chaque information représentative d'un contenu multimédia comprise dans le premier espace de stockage, de sorte que le deuxième terminal affiche (E12) ledit contenu multimédia sur l'interface du deuxième terminal.

2. Procédé de création d'un espace d'interaction partagé selon la revendication 1, dans lequel :
• une information représentative d'un contenu multimédia comprise dans le premier espace de stockage du serveur distant est associée à une information représentative d'une position sur l'interface du premier terminal, l'information représentative d'une position correspondant à l'emplacement où est affiché le contenu multimédia sur l'interface,
• l'envoi au deuxième terminal d'une information représentative d'un contenu multimédia comprise dans le premier espace de stockage comprend en outre l'envoi de l'information représentative de la position dudit contenu multimédia associée.

3. Procédé de création d'un espace d'interaction partagé selon l'une quelconque des revendications 1 ou 2, comprenant :
• une étape de réception en provenance du premier terminal, d'une information représentative d'un nouveau contenu multimédia ajouté sur l'interface du premier terminal au cours de la communication établie, suite à une détection d'une interaction utilisateur,
• une étape de stockage de ladite information représentative dans le premier espace de stockage,
• une étape d'envoi au deuxième terminal de ladite information représentative dudit nouveau contenu multimédia de sorte que le deuxième terminal affiche ledit nouveau contenu multimédia via l'interface du deuxième terminal.

4. Procédé de création d'un espace d'interaction partagé selon l'une quelconque des revendications 2 ou 3, comprenant :
• une étape de réception d'une information représentative d'une interaction utilisateur effectuée sur un contenu multimédia affiché sur l'interface du premier terminal,
• une étape d'envoi au deuxième terminal d'une information représentative de ladite interaction reçue de sorte que le deuxième terminal reproduise sur l'interface du deuxième terminal, l'interaction effectuée sur le contenu multimédia.

5. Procédé de communication entre au moins un premier terminal (T1) et un deuxième terminal (T2), dans lequel, préalablement à l'établissement d'une communication entre le premier terminal et le deuxième terminal :
• un premier espace de stockage d'un serveur distant est associé à un utilisateur du premier terminal, lorsque ledit utilisateur du premier terminal consulte au moins un contenu multimédia via une interface associée audit premier espace de stockage et affichée sur le premier terminal, une information représentative dudit contenu multimédia consulté est stockée dans ledit premier espace de stockage,
• un deuxième espace de stockage d'un serveur distant est associé à un utilisateur du deuxième terminal, lorsque ledit utilisateur du deuxième terminal consulte au moins un contenu multimédia via une interface associée audit deuxième espace de stockage et affichée sur le deuxième terminal, une information représentative dudit contenu multimédia consulté est stockée dans ledit deuxième espace de stockage,
le procédé de communication comprend :
- suite à une étape d'établissement (E_COM) de la communication entre le premier terminal et le deuxième terminal, les étapes suivantes:
• pour chaque contenu multimédia affiché sur l'interface du premier terminal associé au premier espace de stockage :
▪ réception (E10) par le deuxième terminal de l'information représentative du contenu multimédia comprise dans le premier espace de stockage,
▪ obtention (E11) par le deuxième terminal du contenu multimédia, à partir de ladite information représentative reçue,
▪ modification (E12) de l'affichage sur l'interface du deuxième terminal associé au deuxième espace de stockage de sorte à afficher via l'interface du deuxième terminal :
• le contenu multimédia consulté préalablement à l'établissement de la communication, et
• le contenu multimédia obtenu.

6. Procédé de communication selon la revendication 5, comprenant en outre :
• pour chaque information représentative d'un contenu multimédia comprise dans le deuxième espace de stockage, une étape d'envoi au premier terminal de ladite information représentative.

7. Procédé de communication selon l'une quelconque des revendications 5 ou 6, comprenant en outre une étape de réception par le deuxième terminal d'une information représentative d'une position d'affichage d'un contenu multimédia sur l'interface du premier terminal, de sorte que le contenu multimédia est affiché via l'interface du deuxième terminal à une position identique à ladite position d'affichage sur l'interface du premier terminal.

8. Procédé de communication selon l'une quelconque des revendications 5 à 7, dans lequel l'ajout d'un nouveau contenu multimédia sur l'interface du premier terminal au cours de la communication établie déclenche :
▪ une étape de réception par le deuxième terminal d'une information représentative dudit nouveau contenu multimédia,
▪ une étape d'obtention par le deuxième terminal du nouveau contenu multimédia, à partir de ladite information représentative reçue, de sorte à afficher le nouveau contenu multimédia sur l'interface du deuxième terminal.

9. Procédé de communication selon la revendication 8, dans lequel lors de l'ajout du nouveau contenu multimédia sur l'interface du premier terminal au cours de la communication établie, l'information représentative dudit nouveau contenu multimédia est stockée dans le deuxième espace de stockage.

10. Procédé de communication selon l'une quelconque des revendications 5 à 9, dans lequel la fin de la communication établie entre le premier terminal et le deuxième terminal déclenche :
▪ une étape de modification de l'interface du premier terminal de sorte à afficher seulement les contenus multimédia pour lesquels une information représentative est stockée dans le premier espace de stockage,
▪ une étape de modification de l'interface du deuxième terminal de sorte à afficher seulement les contenus multimédia pour lesquels une information représentative est stockée dans le deuxième espace de stockage..

11. Procédé de communication selon l'une quelconque des revendications 5 à 10, comprenant une étape de stockage dans un espace mémoire associé au deuxième terminal d'un contenu affiché sur l'interface du premier terminal et pour lequel une information représentative est stockée dans le premier espace de stockage, suite à la détection d'une interaction utilisateur destinée à sélectionner ledit contenu pour le stocker de manière permanente dans un espace mémoire associé au deuxième terminal.

12. Procédé de communication selon l'une quelconque des revendications 5 à 11, dans lequel suite à une étape de détection d'une interaction effectuée sur un contenu multimédia affiché sur l'interface du premier terminal, le procédé comprend :
• une étape de réception par le deuxième terminal d'une information représentative de ladite interaction,
• une étape de modification de l'affichage du contenu multimédia sur l'interface du deuxième terminal de sorte à reproduire ladite interaction sur ladite interface.

13. Serveur de création d'un espace d'interaction partagé, comprenant:
• un module de stockage adapté pour stocker, préalablement à l'établissement d'une communication entre un premier terminal et un deuxième terminal:
▪ dans un premier espace de stockage associé à un utilisateur du premier terminal, au moins une information représentative d'un premier contenu multimédia lorsque ledit utilisateur du premier terminal consulte ledit premier contenu multimédia sur une interface associée au premier espace de stockage et affichée sur le premier terminal,
▪ dans un deuxième espace de stockage associé à un utilisateur du deuxième terminal, au moins une information représentative d'un deuxième contenu multimédia lorsque ledit utilisateur du deuxième terminal consulte ledit deuxième contenu multimédia sur une interface associée au deuxième espace de stockage et affichée sur le deuxième terminal,
• un module de traitement apte à détecter l'établissement de la communication entre le premier terminal et le deuxième terminal,
• un module de communication activé sur commande du module de traitement suite à l'établissement de la communication entre le premier terminal et le deuxième terminal, ledit module de communication étant apte à envoyer :
▪ au premier terminal, chaque information représentative d'un contenu multimédia comprise dans le deuxième espace de stockage, de sorte que le premier terminal affiche ledit contenu multimédia via l'interface du premier terminal,
▪ au deuxième terminal, chaque information représentative d'un contenu multimédia comprise dans le premier espace de stockage, de sorte que le deuxième terminal affiche ledit contenu multimédia via l'interface du deuxième terminal.

14. Terminal de communication comprenant :
• une interface adaptée pour afficher, préalablement à l'établissement d'une communication entre le terminal et un autre terminal, au moins un premier contenu multimédia consulté par un utilisateur du terminal, une information représentative du premier contenu multimédia étant stockée dans un premier espace de stockage d'un serveur distant, associé à l'utilisateur du terminal, lorsque ledit utilisateur consulte ledit premier contenu multimédia via ladite interface,
• un module de traitement apte à établir une communication avec ledit autre terminal, un utilisateur dudit autre terminal étant associé à un deuxième espace de stockage d'un serveur distant, comprenant au moins une information représentative d'un deuxième contenu multimédia lorsque l'utilisateur de l'autre terminal consulte ledit deuxième contenu multimédia via une interface affichée sur l'autre terminal,
• un module de communication apte à :
▪ recevoir les informations représentatives du deuxième contenu multimédia comprises dans le deuxième espace de stockage,
▪ obtenir, à partir des informations représentatives reçues, ledit deuxième contenu multimédia correspondant aux dites informations représentatives reçues,
• le module de traitement étant apte à modifier l'affichage sur l'interface du terminal de sorte à afficher le premier contenu multimédia consulté préalablement à l'établissement de la communication et le deuxième contenu multimédia obtenu.

15. Programme d'ordinateur comportant des instructions de code de programme pour l'exécution des étapes du procédé de création d'un espace d'interaction partagé selon l'une quelconque des revendications 1 à 4 ou des étapes du procédé de communication selon l'une quelconque des revendications 5 à 12, lorsque le programme est exécuté par un processeur.

## Patentansprüche

1. Verfahren zur Erzeugung eines Interaktionsraums, der zwischen einem ersten Endgerät (T1) und einem zweiten Endgerät (T2) geteilt ist, wobei vor der Herstellung einer Kommunikation zwischen dem ersten Endgerät und dem zweiten Endgerät:
• ein erster Speicherraum eines entfernten Servers mit einem Benutzer des ersten Endgeräts verknüpft wird, der erste Speicherraum umfassend mindestens eine Information, die für einen ersten Multimediainhalt repräsentativ ist, wenn der Benutzer des ersten Endgeräts den ersten Multimediainhalt auf einer Schnittstelle abruft, die mit dem ersten Speicherraum verknüpft ist und auf dem ersten Endgerät angezeigt wird,
• ein zweiter Speicherraum eines entfernten Servers mit einem Benutzer des zweiten Endgeräts verknüpft wird, der zweite Speicherraum umfassend mindestens eine Information, die für einen zweiten Multimediainhalt repräsentativ ist, wenn der Benutzer des zweiten Endgeräts den zweiten Multimediainhalt auf einer Schnittstelle abruft, die mit dem zweiten Speicherraum verknüpft ist und auf dem zweiten Endgerät angezeigt wird,
nach der Wiederherstellung der Kommunikation (E COM) zwischen dem ersten Endgerät und dem zweiten Endgerät das Verfahren Folgendes umfasst:
• einen Schritt des Sendens (E7) jeder Information, die für einen Multimediainhalt repräsentativ ist, die in dem zweiten Speicherraum enthalten ist, an das erste Endgerät, damit das erste Endgerät den Multimediainhalt auf der Schnittstelle des ersten Endgeräts anzeigt (E9),
• einen Schritt des Sendens (E10) jeder Information, die für einen Multimediainhalt repräsentativ ist, die in dem ersten Speicherraum enthalten ist, an das zweite Endgerät, damit das zweite Endgerät den Multimediainhalt auf der Schnittstelle des zweiten Endgeräts anzeigt (E12).

2. Verfahren zur Erzeugung eines geteilten Interaktionsraums nach Anspruch 1, wobei:
• eine Information, die für einen Multimediainhalt repräsentativ ist, die in dem ersten Speicherraum des entfernten Servers enthalten ist, mit einer Information verknüpft wird, die für eine Position auf der Schnittstelle des ersten Endgeräts repräsentativ ist, wobei die Information, die für eine Position repräsentativ ist, dem Ort entspricht, an dem der Multimediainhalt auf der Schnittstelle angezeigt wird,
• das Senden einer Information, die für einen Multimediainhalt repräsentativ ist, die in dem ersten Speicherraum enthalten ist, an das zweite Endgerät, ferner das Senden der Information umfasst, die für die Position des verknüpften Multimediainhalts repräsentativ ist.

3. Verfahren zur Erzeugung eines geteilten Interaktionsraums nach einem der Ansprüche 1 oder 2, umfassend:
• einen Schritt des Empfangens einer Information von dem ersten Endgerät, die für einen neuen Multimediainhalt repräsentativ ist, der auf der Schnittstelle des ersten Endgeräts im Laufe der hergestellten Kommunikation nach einer Erkennung einer Benutzerinteraktion hinzugefügt wird,
• einen Schritt des Speicherns der repräsentativen Information in dem ersten Speicherraum,
• einen Schritt des Sendens der Information, die für den neuen Multimediainhalt repräsentativ ist, an das zweite Endgerät, damit das zweite Endgerät den neuen Multimediainhalt über die Schnittstelle des zweiten Endgeräts anzeigt.

4. Verfahren zur Erzeugung eines geteilten Interaktionsraums nach einem der Ansprüche 2 oder 3, umfassend:
• einen Schritt des Empfangens einer Information, die für eine Benutzerinteraktion repräsentativ ist, die an einem Multimediainhalt ausgeführt wird, der auf der Schnittstelle des ersten Endgeräts angezeigt wird,
• einen Schritt des Sendens einer Information, die für die empfangene Interaktion repräsentativ ist, an das zweite Endgerät, damit das zweite Endgerät auf der Schnittstelle des zweiten Endgeräts die Interaktion reproduziert, die an dem Multimediainhalt ausgeführt wurde.

5. Verfahren zur Kommunikation zwischen mindestens einem ersten Endgerät (T1) und einem zweiten Endgerät (T2), wobei vor der Herstellung einer Kommunikation zwischen dem ersten Endgerät und dem zweiten Endgerät:
• ein erster Speicherraum eines entfernten Servers mit einem Benutzer des ersten Endgeräts verknüpft wird, wenn der Benutzer des ersten Endgeräts mindestens einen Multimediainhalt über eine Schnittstelle abruft, die mit dem ersten Speicherraum verknüpft ist und auf dem ersten Endgerät angezeigt wird, eine Information, die für den abgerufenen Multimediainhalt repräsentativ ist, in dem ersten Speicherraum gespeichert wird,
• ein zweiter Speicherraum eines entfernten Servers mit einem Benutzer des zweiten Endgeräts verknüpft wird, wenn der Benutzer des zweiten Endgeräts mindestens einen Multimediainhalt über eine Schnittstelle abruft, die mit dem zweiten Speicherraum verknüpft ist und auf dem zweiten Endgerät angezeigt wird, eine Information, die für den abgerufenen Multimediainhalt repräsentativ ist, in dem zweiten Speicherraum gespeichert wird,
das Verfahren zur Kommunikation Folgendes umfasst:
- nach einem Schritt des Herstellens (E COM) der Kommunikation zwischen dem ersten Endgerät und dem zweiten Endgerät, die folgenden Schritte:
• für jeden Multimediainhalt, der auf der Schnittstelle des ersten Endgeräts angezeigt wird, das mit dem ersten Speicherraum verknüpft ist:
▪ Empfangen (E10), durch das zweite Endgerät, der Information, die für den Multimediainhalt repräsentativ ist, die in dem ersten Speicherraum enthalten ist,
▪ Erhalten (E11), durch das zweite Endgerät, des Multimediainhalts anhand der empfangenen repräsentativen Information,
▪ Ändern (E12) der Anzeige auf der Schnittstelle des zweiten Endgeräts, die mit dem zweiten Speicherraum verknüpft ist, um über die Schnittstelle des zweiten Endgeräts Folgendes anzuzeigen:
• den Multimediainhalt, der vor der Herstellung der Kommunikation abgerufen wurde, und
• den erhaltenen Multimediainhalt.

6. Verfahren zur Kommunikation nach Anspruch 5, ferner umfassend:
• für jede Information, die für einen Multimediainhalt repräsentativ ist, die in dem zweiten Speicherraum enthalten ist, einen Schritt des Sendens der repräsentativen Information an das erste Endgerät.

7. Verfahren zur Kommunikation nach einem der Ansprüche 5 oder 6, ferner umfassend einen Schritt des Empfangens, durch das zweite Endgerät, einer Information, die für eine Anzeigeposition eines Multimediainhalts auf der Schnittstelle des ersten Endgeräts repräsentativ ist, so dass der Multimediainhalt über die Schnittstelle des zweiten Endgeräts an einer Position angezeigt wird, die mit der Anzeigeposition auf der Schnittstelle des ersten Endgeräts identisch ist.

8. Verfahren zur Kommunikation nach einem der Ansprüche 5 bis 7, wobei die Hinzufügung eines neuen Multimediainhalts auf der Schnittstelle des ersten Endgeräts im Laufe der hergestellten Kommunikation Folgendes auslöst:
▪ einen Schritt des Empfangens, durch das zweite Endgerät, einer Information, die für den neuen Multimediainhalt repräsentativ ist,
▪ einen Schritt des Empfangens des neuen Multimediainhalts durch das zweite Endgerät anhand der empfangenen repräsentativen Information, um den neuen Multimediainhalt auf der Schnittstelle des zweiten Endgeräts anzuzeigen.

9. Verfahren zur Kommunikation nach Anspruch 8, wobei beim Hinzufügen des neuen Multimediainhalts auf der Schnittstelle des ersten Endgeräts im Laufe der hergestellten Kommunikation die Information, die für den neuen Multimediainhalt repräsentativ ist, in dem zweiten Speicherraum gespeichert wird.

10. Verfahren zur Kommunikation nach einem der Ansprüche 5 bis 9, wobei das Ende der Kommunikation, die zwischen dem ersten Endgerät und dem zweiten Endgerät hergestellt ist, Folgendes auslöst:
▪ einen Schritt des Änderns der Schnittstelle des ersten Endgeräts, um nur die Multimediainhalte anzuzeigen, für die eine repräsentative Information in dem ersten Speicherraum gespeichert wird,
▪ einen Schritt des Änderns der Schnittstelle des zweiten Endgeräts, um nur die Multimediainhalte anzuzeigen, für die eine repräsentative Information in dem zweiten Speicherraum gespeichert wird.

11. Verfahren zur Kommunikation nach einem der Ansprüche 5 bis 10, umfassend einen Schritt des Speicherns, in einem Speicherbereich, der mit dem zweiten Endgerät verknüpft ist, eines Inhalts, der auf der Schnittstelle des ersten Endgeräts angezeigt wird und für den eine repräsentative Information in dem ersten Speicherraum gespeichert wird, nach einer Erkennung einer Benutzerinteraktion zur Auswahl des Inhalts, um ihn dauerhaft in einem Speicherbereich zu speichern, der mit dem zweiten Endgerät verknüpft ist.

12. Verfahren zur Kommunikation nach einem der Ansprüche 5 bis 11, wobei nach dem Schritt des Erkennens einer Interaktion, die an einem Multimediainhalt ausgeführt wird, der auf der Schnittstelle des ersten Endgeräts angezeigt wird, das Verfahren Folgendes umfasst:
• einen Schritt des Empfangens, durch das zweite Endgerät, einer Information, die für die Interaktion repräsentativ ist,
• einen Schritt des Änderns der Anzeige des Multimediainhalts auf der Schnittstelle des zweiten Endgeräts, um die Interaktion auf der Schnittstelle zu reproduzieren.

13. Server zur Erzeugung eines geteilten Interaktionsraums, umfassend:
• ein Speichermodul, das geeignet ist, vor der Herstellung einer Kommunikation zwischen einem ersten Endgerät und einem zweiten Endgerät, Folgendes zu speichern:
▪ in einem ersten Speicherraum, der mit einem Benutzer des ersten Endgeräts verknüpft ist, mindestens eine Information, die für einen ersten Multimediainhalt repräsentativ ist, wenn der Benutzer des ersten Endgeräts den ersten Multimediainhalt auf einer Schnittstelle abruft, die mit dem ersten Speicherraum verknüpft ist und auf dem ersten Endgerät angezeigt wird,
▪ in einem zweiten Speicherraum, der mit einem Benutzer des zweiten Endgeräts verknüpft ist, mindestens eine Information, die für einen zweiten Multimediainhalt repräsentativ ist, wenn der Benutzer des zweiten Endgeräts den zweiten Multimediainhalt auf einer Schnittstelle abruft, die mit dem zweiten Speicherraum verknüpft ist und auf dem zweiten Endgerät angezeigt wird,
• ein Verarbeitungsmodul, das geeignet ist, die Herstellung der Kommunikation zwischen dem ersten Endgerät und dem zweiten Endgerät zu erkennen,
• ein Kommunikationsmodul, das auf Befehl des Verarbeitungsmoduls nach der Herstellung der Kommunikation zwischen dem ersten Endgerät und dem zweiten Endgerät aktiviert wird, wobei das Kommunikationsmodul geeignet ist, Folgendes zu senden:
▪ jede Information, die für einen Multimediainhalt repräsentativ ist, die in dem zweiten Speicherraum enthalten ist, an das erste Endgerät, damit das erste Endgerät den Multimediainhalt über die Schnittstelle des ersten Endgeräts anzeigt,
▪ jede Information, die für einen Multimediainhalt repräsentativ ist, die in dem ersten Speicherraum enthalten ist, an das zweite Endgerät, damit das zweite Endgerät den Multimediainhalt über die Schnittstelle des zweiten Endgeräts anzeigt.

14. Kommunikationsendgerät, umfassend:
• eine Schnittstelle, die angepasst ist, vor der Herstellung einer Kommunikation zwischen dem Endgerät und einem anderen Endgerät mindestens einen ersten Multimediainhalt anzuzeigen, der von einem Benutzer des Endgeräts abgerufen wird, wobei eine Information, die für den ersten Multimediainhalt repräsentativ ist, in einem ersten Speicherraum eines entfernten Servers gespeichert wird, der mit dem Benutzer des Endgeräts verknüpft ist, wenn der Benutzer den ersten Multimediainhalt über die Schnittstelle abruft,
• ein Verarbeitungsmodul, das geeignet ist eine Kommunikation mit dem anderen Endgerät herzustellen, wobei ein Benutzer des anderen Endgeräts mit einem zweiten Speicherraum eines entfernten Servers verknüpft ist, umfassend mindestens eine Information, die für einen zweiten Multimediainhalt repräsentativ ist, wenn der Benutzer des anderen Endgeräts den zweiten Multimediainhalt über eine Schnittstelle abruft, die auf dem anderen Endgerät angezeigt wird,
• ein Kommunikationsmodul, das geeignet ist:
▪ die Informationen zu empfangen, die für den zweiten Multimediainhalt repräsentativ sind, die in dem zweiten Speicherraum enthalten sind,
▪ anhand der empfangenen Informationen den zweiten Multimediainhalt zu erhalten, der den empfangenen repräsentativen Informationen entspricht,
• wobei das Verarbeitungsmodul geeignet ist, die Anzeige auf der Schnittstelle des Endgeräts zu ändern, um den ersten Multimediainhalt, der vor der Herstellung der Kommunikation abgerufen wurde, und den zweiten erhaltenen Multimediainhalt anzuzeigen.

15. Computerprogramm, umfassend Programmcode-Anweisungen für die Ausführung der Schritte des Verfahrens zur Erzeugung eines geteilten Interaktionsraums nach einem der Ansprüche 1 bis 4 oder der Schritte des Verfahrens zur Kommunikation nach einem der Ansprüche 5 bis 12, wenn das Programm von einem Prozessor ausgeführt wird.

## Claims

1. Method for creating an interaction space shared between a first terminal (T1) and a second terminal (T2), in which, prior to establishing a communication between the first terminal and the second terminal:
• a first storage space of a remote server is associated with a user of the first terminal, said first storage space comprising at least one piece of information representative of a first multimedia content, when said user of the first terminal consults the first multimedia content on an interface associated with the first storage space and displayed on the first terminal,
• a second storage space of a remote server is associated with a user of the second terminal, said second storage space comprising at least one piece of information representative of a second multimedia content, when said user of the second terminal consults the second multimedia content on an interface associated with the second storage space and displayed on the second terminal,
following the establishment of the communication (E_COM) between the first terminal and the second terminal, the method comprises:
• a step for sending (E7) to the first terminal each piece of information representative of a multimedia content comprised in the second storage space, such that the first terminal displays (E9) said multimedia content on the interface of the first terminal,
• a step for sending (E10) to the second terminal each piece of information representative of a multimedia content comprised in the first storage space, such that the second terminal displays (E12) said multimedia content on the interface of the second terminal.

2. Method for creating a shared interaction space according to Claim 1, in which:
• information representative of a multimedia content comprised in the first storage space of the remote server is associated with information representative of a position on the interface of the first terminal, the information representative of a position corresponding to the location where the multimedia content is displayed on the interface,
• sending to the second terminal information representative of a multimedia content comprised in the first storage space furthermore comprises sending the associated information representative of the position of said multimedia content.

3. Method for creating a shared interaction space according to either one of Claims 1 and 2, comprising:
• a step for receiving information coming from the first terminal representative of a new multimedia content added on the interface of the first terminal during the established communication, following a detection of a user interaction,
• a step for storing said information representative in the first storage space,
• a step for sending to the second terminal said information representative of said new multimedia content such that the second terminal displays said new multimedia content via the interface of the second terminal.

4. Method for creating a shared interaction space according to either one of the Claims 2 and 3, comprising:
• a step for receiving information representative of a user interaction carried out on a multimedia content displayed on the interface of the first terminal,
• a step for sending to the second terminal information representative of said interaction received such that the second terminal reproduces the interaction carried out on the multimedia content on the interface of the second terminal.

5. Method for communicating between at least a first terminal (T1) and a second terminal (T2), in which, prior to establishing a communication between the first terminal and the second terminal:
• a first storage space of a remote server is associated with a user of the first terminal, when said user of the first terminal consults at least one multimedia content via an interface associated with said first storage space and displayed on the first terminal, information representative of said consulted multimedia content is stored in said first storage space,
• a second storage space of a remote server is associated with a user of the second terminal, when said user of the second terminal consults at least one multimedia content via an interface associated with said second storage space and displayed on the second terminal, information representative of said consulted multimedia content is stored in said second storage space,
the method of communication comprises:
- following a step for establishing (E_COM) the communication between the first terminal and the second terminal, the following steps:
• for each multimedia content displayed on the interface of the first terminal associated with the first storage space:
▪ the second terminal receives (E10) the information representative of the multimedia content comprised in the first storage space,
▪ the second terminal obtains (E11) the multimedia content using said received representative information,
▪ the display on the interface of the second terminal associated with the second storage space is modified (E12) so as to display via the interface of the second terminal:
▪ the multimedia content consulted prior to establishing the communication, and
▪ the multimedia content obtained.

6. Method of communication according to Claim 5, furthermore comprising:
• for each piece of information representative of a multimedia content comprised in the second storage space, a step for sending said representative information to the first terminal.

7. Method of communication according to either one of the Claims 5 and 6, furthermore comprising a step where the second terminal receives information representative of a display position of a multimedia content on the interface of the first terminal, such that the multimedia content is displayed via the interface of the second terminal at a position identical to said display position on the interface of the first terminal.

8. Method of communication according to any one of the Claims 5 to 7, in which the addition of a new multimedia content on the interface of the first terminal during the established communication triggers:
▪ a step where the second terminal receives information representative of said new multimedia content,
▪ a step where the second terminal obtains the new multimedia content, using said received representative information, so as to display the new multimedia content on the interface of the second terminal.

9. Method of communication according to Claim 8, in which, when the new multimedia content is added on the interface of the first terminal during the established communication, the information representative of said new multimedia content is stored in the second storage space.

10. Method of communication according to any one of the Claims 5 to 9, in which the end of the communication established between the first terminal and the second terminal triggers:
▪ a step for modification of the interface of the first terminal so as to display only the multimedia contents for which representative information is stored in the first storage space,
▪ a step for modification of the interface of the second terminal so as to display only the multimedia contents for which representative information is stored in the second storage space.

11. Method of communication according to any one of the Claims 5 to 10, comprising a step for storing in a memory space associated with the second terminal a content displayed on the interface of the first terminal and for which representative information is stored in the first storage space, following the detection of a user interaction intended to select said content in order to store it permanently in a memory space associated with the second terminal.

12. Method of communication according to any one of the Claims 5 to 11, in which, following a step for detecting an interaction carried out on a multimedia content displayed on the interface of the first terminal, the method comprises:
• a step where the second terminal receives information representative of said interaction,
• a step for modification of the display of the multimedia content on the interface of the second terminal so as to reproduce said interaction on said interface.

13. Server for creating a shared interaction space, comprising:
• a storage module designed to store, prior to establishing a communication between a first terminal and a second terminal:
▪ in a first storage space associated with a user of the first terminal, at least one piece of information representative of a first multimedia content, when said user of the first terminal consults said first multimedia content on an interface associated with the first storage space and displayed on the first terminal,
▪ in a second storage space associated with a user of the second terminal, at least one piece of information representative of a second multimedia content, when said user of the second terminal consults said second multimedia content on an interface associated with the second storage space and displayed on the second terminal,
• a processing module designed to detect the establishment of the communication between the first terminal and the second terminal,
• a communication module activated upon a command from the processing module following the establishing of the communication between the first terminal and the second terminal, said communication module being designed to send:
▪ to the first terminal, each piece of information representative of a multimedia content comprised in the second storage space, such that the first terminal displays said multimedia content via the interface of the first terminal,
▪ to the second terminal, each piece of information representative of a multimedia content comprised in the first storage space, such that the second terminal displays said multimedia content via the interface of the second terminal.

14. Communication terminal comprising:
• an interface suitable for displaying, prior to establishing a communication between the terminal and another terminal, at least one first multimedia content consulted by a user of the terminal, information representative of the first multimedia content being stored in a first storage space of a remote server, associated with the user of the terminal, when said user consults said first multimedia content via said interface,
• a processing module designed to establish a communication with said other terminal, a user of said other terminal being associated with a second storage space of a remote server, comprising at least one piece of information representative of a second multimedia content when the user of the other terminal consults said second multimedia content via an interface displayed on the other terminal,
• a communication module designed to:
▪ receive the information representative of the second multimedia content comprised in the second storage space,
▪ obtain, from the received representative information, said second multimedia content corresponding to said received representative information,
• the processing module being capable of modifying the display on the interface of the terminal so as to display the first multimedia content consulted prior to establishing the communication and the second multimedia content obtained.

15. Computer program comprising program code instructions for executing the steps of the method for creating a shared interaction space according to any one of the Claims 1 to 4 or the steps of the method of communication according to any one of the Claims 5 to 12, when the program is executed by a processor.
